# EUROPEAN PATENT APPLICATION

(11) **EP 2 000 022 A2**
(43) Date of publication of application: **10.12.2008**
(21) Application number: 08251935.6
(22) Date of filing: 04.06.2008
(51) Int. Cl.: A01K 1/00, A01K 11/00, A01K 29/00

(54) **Livestock drafting apparatus and method**

(30) Priority: 05.06.2007 GB 0710787
(71) Applicant: Shearwell Data Limited, Minehead, Somerset TA24 7AS (GB)
(72) Inventor: Webber, Richard, Minehead, Somerset TA24 7AS (GB)
(74) Representative: Johnson, Richard Alan

(57) **Abstract**

Apparatus for drafting livestock e.g. from a single race through a set of gates into a plurality of separate drafting groups in which a drafting controller (126) is arranged to receive e.g. wirelessly data from an electronic identification reader (122), to select automatically the drafting group for the animal, e.g. based on querying a database (132) or looking up information in a table. The drafting controller is communicable with a audio output device, e.g. voice chip (144) and speaker (146), that is arranged to output an audible signal which is indicative of the selected drafting group on the basis of instructions from the drafting controller. Automated identification of the drafting group for an animal means the attention of the operator of the set of gates is not distracted away from the animals.

## Description

This invention relates to apparatus and methods for livestock drafting, i.e. the sorting or selecting of livestock according to predetermined criteria, e.g. age, breed, readiness for market.

Livestock farmers (e.g. sheep farmers) typically maintain electronic (e.g. database) records for each of their animals to enable them more efficiently to manage the farm. For example, the electronic records allow the farmer to keep track of movements to and from the farm and to record births, deaths, weights, scrapie genotypes, pedigrees and the like to facilitate record keeping required by law. In addition, records can be kept relating to veterinary and/or medical treatment of animals, e.g. to keep track of treatments, tuppings, etc.

It is often necessary to separate a group of animals, e.g. flock of sheep, into separate sub-groups (drafting groups). For example, it may be necessary to separate animals that have already received a particular treatment from those that have not, in order for the untreated animals to receive treatment. Alternatively, it may be necessary to separate older from younger animals for various reasons. The separating of animals (known as drafting) is typically carried out according to a variety of criteria (including genotype, sex, breed, age, cull reasons, multiple births and many more).

Before electronic records and electronic identification of animals was introduced, drafting was a laborious process, often requiring a farmer to individually identify animals in the field and mark them (e.g. using coloured dye) so that the drafting group to which they should be directed could be identified at the time the flock were drafted. To draft a herd or flock e.g. of sheep, the animals are directed in single file down a narrow channel (race). The end of the race typically has a plurality of gates, leading to separate pens for containing the separate drafting groups. When an animal passes along the race, the gate corresponding to its drafting group is opened (the remaining gates being closed) so that the animal is directed into the correct pen.

With the advent of electronic records and electronic radio frequency identification (RFID) tags, there was a desire to automate the drafting system to improve its efficiency. Accordingly, an automatic drafting apparatus was developed. The automatic device included a drafting crate for receiving animals from the race on a one-by-one basis. The crate contains a weighing unit that is arranged to detect the presence of an animal captured within the crate. The captured animal is identified, e.g. using an antenna/reader arrangement adapted to energise and read an RFID tag worn by the animal. Using the animal's identification, a database storing records relating to that animal is accessed. The records are compared with predetermined criteria set to characterise the drafting groups, and on the basis of comparison a gate corresponding to the drafting group determined for the animal is automatically opened (e.g. using compressed air).

The above-described automatic drafting apparatus is disadvantageous for a number of reasons. Firstly, it requires the presence of a weighing unit in order to establish the presence of an animal to be identified and trigger the process. Existing farm races typically do not contain such weighing units, so this requirement adds considerable expense to the apparatus as a whole, and may require the building of a dedicated race for the automatic drafting apparatus. Furthermore, the weigh unit may represent an uneconomical investment, e.g. if drafting is a rare event on a particular farm. Secondly, the automatic drafting system requires the flow of animals through the race to be stop-start because each animal must be stationary when in the crate. This makes the overall drafting operation slower and more traumatic for the animals. Finally, the automatic drafting apparatus is an on-site facility; it cannot be moved from race to race, i.e. it is not portable.

At its most general, the present invention provides livestock drafting apparatus in which an audio signal to aid drafting is automatically generated based on the identification of a livestock animal from its electronic identification (EID) tag.

The audio signal may be used in a semi-automated drafting operation, e.g. as a signal for a human operator to open the correct gate for the livestock animal. An advantage of the audio signal is that the operator need not switch his view away from the livestock animal during drafting. Furthermore, the semi-automated operation may be advantageous because of its portability and transferability. It can be used on existing drafting races because it is not necessary to equip drafting gates or races with equipment for automatic opening in response to an external e.g. electronic signal. The audio signal may however be used in a fully automated drafting operation, e.g. where drafting gates are arranged to open automatically in response to a predetermined audio signal.

The invention may provide livestock drafting apparatus that enables livestock to be identified without the need for individual weighing in a drafting crate. Consequently, the drafting apparatus of the present invention may allow substantially continuous livestock flow along the race.

According to one aspect of the invention, there may be provided livestock drafting apparatus comprising: an electronic identification (EID) reader arranged to obtain data from an EID element associated with a livestock animal; a drafting controller arranged to receive the obtained data from the EID reader and automatically select a drafting group for the livestock animal based on the obtained data; and an audio output device in communication with the drafting controller to receive an operation instruction which corresponds to the selected drafting group, wherein the audio output device is arranged to output an audible signal which is indicative of the selected drafting group.

In the invention, the automatic identification of the drafting group for the animal is separated from the automatic operation of a device to aid directing that animal in a determined direction. This feature can obviate the requirement for a weighing unit and hence allows for improved animal flow through the race.

The EID reader may be a EID transceiver having an antenna arranged to emit a electromagnetic (e.g. radio) field to excite the EID element associated with the livestock animal. The EID element may be an radio frequency identification (RFID) transponder, e.g. encased in an ear tag or ruminal bolus. The EID transceiver may receive the response of the transponder and communicate it to the drafting controller. The EID reader may be in wireless communication with the drafting controller e.g. via a short range radio communication interface, e.g. Bluetooth®. Alternatively, the EID reader may be wired to the drafting controller or part of the same device.

The drafting controller may be computer host having a processor arranged to execute software instructions to effect the automatic selection of a drafting group for a livestock animal based on data obtained from that animal's EID element. The drafting controller may be implemented on any device with processing capability, e.g. a personal computer, laptop, personal digital assistant (PDA) or mobile (cellular) telephone. In one embodiment, the drafting controller is portable, which can enable it to be easily transferred between races.
The controller may include an animal database which stores information about livestock animals to be drafted. For example, the database may store identification information (e.g. weight, sex, breed, birth date, etc.) and/or veterinary information (e.g. vaccination dates or other medical information) for each animal. The drafting controller may be arranged to look up information from the database for an animal based on the obtained data from that animal's EID element. The automatic selection of a drafting group may be made using information looked up in this way. For example, the software instructions may include a predetermined set of criteria for allocating animals to a drafting group. In one example, it may be desirable to put all animals having an age at or above a preset value into a first drafting group and all animals having an age below that preset value into a second drafting group. In this case, the drafting controller processor may be arranged to execute software instructions to access the database to identify information (e.g. age) relating to a livestock animal using the obtained data from the animal's EID element and to apply the identified information to a predetermined set of criteria to select a drafting group for the animal.

The predetermined set of criteria may be programmable at the host to enable different drafting groups to be selected. Batches of animals having specific attributes may therefore be obtained.

The audio output device may be a speaker unit, e.g. in an amplifier or in a pair of headphones worn by a drafting gate operator. The audio output device may be in wireless communication with the drafting controller. In the case of headphones this is advantageous because the movement of the gate operator need not be physically constrained. The wireless communication may be achieved using a short range radio interface, e.g. incorporating Bluetooth® technology.

In one embodiment, the audio output unit includes a processor for generating an audible command based on an operating instruction from the drafting controller that is indicative of the selected drafting group for a livestock animal. The audible command may be produced by a buzzer. Different tones or rhythms may be used to identify the drafting direction. In one embodiment, the processor is arranged to generate voice commands, e.g. pre-recorded or automated commands, to tell the operator how to proceed. The voice commands may also relay other information e.g. relating to the identified animal.

The processor may include a voice chip arranged to generate (e.g. synthesise) a spoken command from information contained in the operating instruction from the drafting controller. The spoken commands may be programmable e.g. at the drafting controller. They may therefore be customised for the desired drafting groups.

In an alternative embodiment, the drafting controller may store a plurality of audio signals and may be arranged to instruct the audio output device to emit one of those signals for each animal based on the selected drafting group.

From the audio signal, an operator may be able to direct an identified animal into the correct drafting group based on stored (e.g. electronically stored) records relating to that animal.

The apparatus may be implemented on a race which terminates with a plurality of gates. Each drafting group may be accessed from the race through a corresponding gateway. The operator may open and close gates to allow or deny access through a particular gateway according to the audio signal. The gates may be manually operated. The number of gates is not particularly limited, there may be two or three or four or five. Each output may be a signal telling the operator which of the gates to open. The apparatus may be arranged so that only one gate may be open at any one time.

The EID reader may be mounted on the race. It may include an antenna adapted to straddle the race, e.g. passing above or below the animals. An antenna of this type is disclosed in WO2004/026025. The reader may be a stationary reader mounted alongside the race, or it may be a handheld (portable) reader carried by the user. The antenna may be slidably mounted on the race to enable the distance between an animal reading position and the drafting gates to be adjusted. This can allow the system to be adjusted for different animal speeds through the race so that a gate operator has enough time to react to the audible signal.

In one embodiment, the drafting controller includes a comparison unit in which predetermined criteria may be set, e.g. before drafting commences. The predetermined criteria may be data values for comparison with the content of corresponding data fields stored for each livestock animal in a database that is accessible by the drafting controller. The drafting controller may be arranged to access the database upon receiving the data obtained from the EID element of a particular animal and to download the records stored for that animal or a subset containing one or more records stored for that animal, and to provide the downloaded information to the comparison unit. The comparison unit may be arranged to perform the comparison of the downloaded records with the predetermined criteria to determine the drafting group for the animal. The comparison unit may be arranged to generate a signal indicative of that determined group. The generated signal may be electronic, e.g. suitable for processing by the audio output device mentioned above.

The downloading and comparison steps may take place before drafting begins. Information may be downloaded and the flock virtually sorted into drafting groups according to the desired criteria to create lists, or back-up tables in the comparison unit that may be referred to when identification information about a drafted animal is obtained. In this case, the comparison may simply be to check in which group the detected animal belongs.

The predetermined criteria may relate to one or more of the stored records relating to the livestock. As mentioned above, the stored records may be held on a central database, e.g. the Farmworks database operated by the applicant. For example, the criteria may relate to weight, medical treatment, age, breed, readiness for market, movements etc of the livestock. The present system is applicable to all kinds of farm livestock. It is particularly relevant to sheep.

In another aspect, the present invention may provide indicator apparatus for use with a livestock identification device to indicate the drafting direction of an identified animal to draft the identified animal into a drafting group determined by comparison of stored information relating to the identified animal with predetermined criteria, wherein the apparatus has a plurality of outputs that are selectively operable to indicate said drafting direction, and the apparatus is arranged to select its output on the basis of a signal representative of the determined drafting group. The indicator apparatus may have any of the features of the apparatus discussed above. For example, the outputs may be audible, and the livestock identification device may be an EID reader.

In another aspect, the present invention may provide a livestock drafting method for separating livestock into drafting groups according to predetermined criteria by directing livestock from a race into a set of drafting directions, each direction corresponding to one of the drafting groups, the method including: setting criteria which characterise the drafting groups; setting a drafting direction for each drafting group; directing livestock through the race; identifying an animal in the race by obtaining data from an electronic identification (EID) element associated with that animal; accessing stored records relating to the identified animal; comparing stored records with the set criteria to determine the drafting group for the identified animal; and generating an audible signal indicative of a drafting direction on the basis of the determined drafting group. The stored records may be held on an electronic database and the step of accessing the records and comparing those records with the predetermined criteria may be automatically carried out by executing software instructions in a drafting controller.

Another aspect is any drafting method using apparatus as described herein.

Further details, options and preferences of the invention are described below in relation to an embodiment described with reference to the accompanying drawings, in which:
Fig. 1 is a schematic diagram of livestock drafting apparatus that is an embodiment of the invention;
Fig. 2 is a block diagram showing the flow of data in apparatus that is an embodiment of the invention;
Fig. 3 is front view of a pair of headphones which are indicator apparatus according to an embodiment of the invention;
Fig. 4 is a side view of an earpiece of the pair of headphones shown in Fig. 3 with a circuit board mounted therewithin exposed; and
Fig. 5 is a side view of an earpiece of the pair of headphones shown in Fig. 3 with a cover mounted over the circuit board.

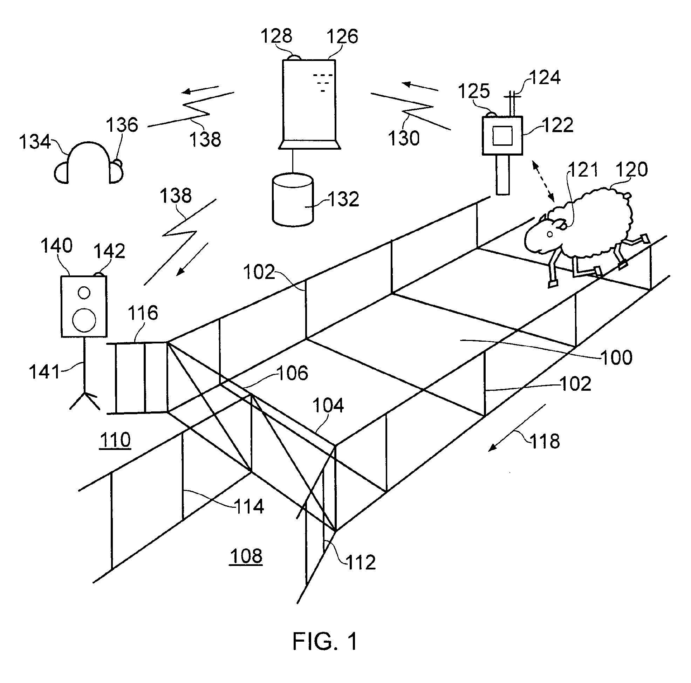

Fig. 1 shows livestock drafting apparatus according to an embodiment of the invention. The apparatus is provided around a race 100, which is a narrow channel bounded by side rails 102 for guiding livestock animals to be drafted. At the end of the race there are two gates 104, 106 which can be opened to lead into respective pens 108, 110 for holding a respective drafting group. Although two gates and two pens are illustrated, the invention can be implemented with any practical number of gates. The pens 108, 110 are surrounded by rails 112, 114, 116 to maintain separation of the drafting groups.

To effect drafting, livestock animals e.g. sheep 120 are introduced to the race 100 in a drafting direction 118 which leads them towards the gates 104, 106. Each animal 120 has an electronic identification (EID) transponder 121 associated with it. In the illustrated embodiment, the EID transponder 121 is encased in an ear tag.

An EID transceiver 122 is provided on the race to obtain data from the EID transponder 121. The EID transceiver 122 includes an antenna 124 that is arranged to emit an electromagnetic (e.g. radio) field to energise the transponder 121 to cause it to emit a data packet. The emitted data packet includes a code containing data which is unique to that animal. The antenna 124 is arranged to detect the emitted data packet to obtain the unique data. In the illustrated embodiment, the EID transceiver 122 is a portable device with an inbuilt antenna 124. In alternative arrangements, the transceiver may be separate from (but communicable with) the antenna. Either or both components may be mounted on the race. In one embodiment, the antenna may pass over or under the race.

The EID transceiver 122 is equipped with a short range radio communication interface 125 (e.g. is Bluetooth® enabled) which is arranged to transmit a data packet containing the unique animal data to a host computer 126 via wireless connection 130. The host computer 126 acts as a drafting controller. The computer 126 contains a processor and memory (not shown) which stores software instructions that are executable by the processor to cause the computer to perform the functions described below. In one embodiment, the host computer 126 is a suitably programmed handheld computer, e.g. a Psion Workabout PRO. The host computer 126 is arranged used to access and download records from a database 132 (e.g. the Farmworks database operated by Shearwell Data Limited) using the unique data received from the EID transceiver 122. Thus, when an animal having an EID transponder 121 enters the antenna field in the race 100, the data contained in the transponder 121 is obtained by the transceiver 122, and forwarded to the host computer 126, where it can be used to obtain other information stored for the animal.

The host computer 126 is arranged to match the downloaded information with predetermined criteria stored within it (e.g. set by the farmer before drafting begins) to enable it to determine the drafting group of the detected animal. The host computer 126 may be arranged to download information from the database upon receiving the unique data from the EID transceiver 122, to enable comparison to take place in real time. Alternatively, data for all the livestock to be drafted may be downloaded before drafting begins to allow the comparison and decisions about which animal belongs in which drafting group to take place before drafting starts. In this case, upon receiving the unique data for an animal from the transceiver, the host computer 126 may simply match the received identification with the already stored grouping e.g. saved in its memory.

To receive the unique data from the transceiver 122, the host computer 126 also possesses a short range radio communications interface 128. After determining (selecting) a drafting group for the animal whose unique data has been received from the transceiver 122, the host computer 126 is arranged to generate an operation instruction and communicate that instruction using the short range radio (e.g. Bluetooth®) communications interface 128 to an audio output device. In the illustrated embodiment there are two audio output devices: a pair of headphones 134 and a speaker 140 mounted on a stand 141. Either of these devices could be used on their own. Both the pair of headphones 134 and the speaker 140 possess a short range radio (e.g. Bluetooth®) communications receiver 136, 142 for receiving the operation instruction from the host computer 126 via wireless connection 138.

The pair of headphones 134 and speaker 140 both contain a processor (not shown) arranged to interpret the operation instruction to cause an audible signal to be produced. The operation instruction may include a sound file (e.g. selected from a library of pre-programmed sound files stored in the memory of the host computer 126) which is executed by the processor to produce the audible signal. Alternatively, the pair of headphones 134 and speaker 140 may be arranged to select a sound file from a local memory or to process the instruction to generate (e.g. synthesise) the audible signal. In the latter case, a voice chip may be mounted within the headphones 134 or speaker 140. Alternatively, the voice chip may be in the host computer.

The audible signal is indicative of the drafting group of the animal 120 that has been identified. Based on the audible signal, a gate operator (not shown) listening either to the headphones 134 or the speaker 140 can open the relevant gate and send the animal 120 to the correct drafting group. At a basic level, the audible signal may simple be a tone whose pitch or duration is different for each drafting group. However, the invention may provide a more advanced solution where spoken (voice) commands are used. For example, the operation instruction may provoke playback of a pre-recorded message, e.g. "left", "right" or "forward". Specific voice commands may be programmed or downloaded at the host computer 126 and communicated to the audio output device 134, 140 in an operation instruction via the wireless connection 138. In this way a user may be able to customise the audible signal for a specific drafting project.

The audible signal can allow hands-free operation of the drafting gate with the advantage that the gate operator need not remove his attention from the animal being drafted e.g. to look up details on a screen or other visible media.

The operation instruction may be arranged to cause additional information to be provided audibly. In theory, any information about the animal stored in the database could be provided audibly during drafting.

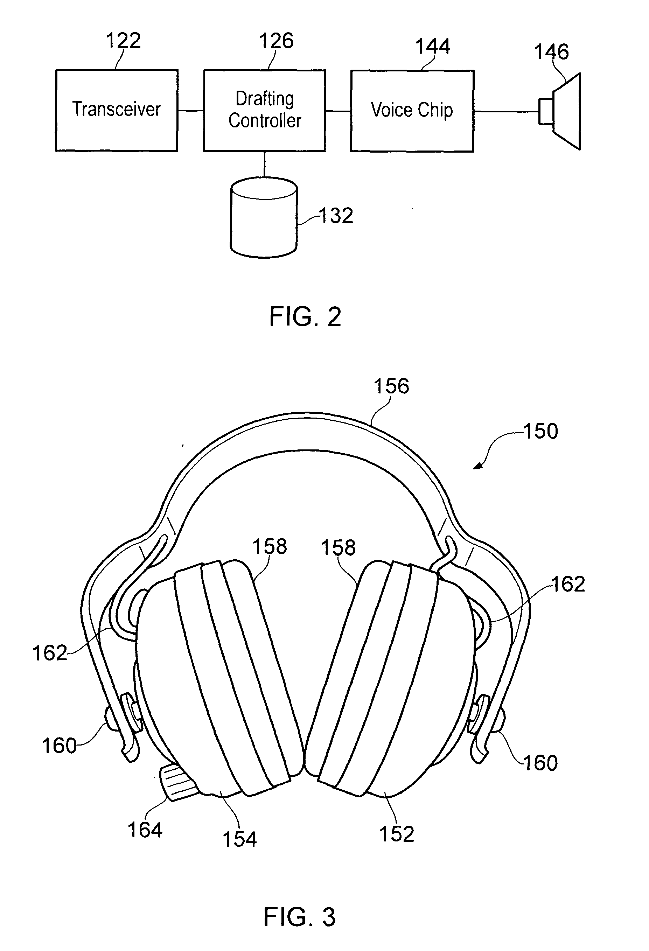

Fig. 2 is a schematic block diagram of data flow through the apparatus shown in Fig. 1. As explained above, the first step is obtaining identification information (e.g. a unique data code) from the animal being drafted. This identification information is obtained by the transceiver 122 and forwarded to the host computer (drafting controller) 126. The drafting controller 126 is arranged to access records for the identified animal in a database 132 using the animal's unique data code. The drafting controller 126 is then arranged to compare the accessed records with a predetermined set of criteria to select a drafting group for the identified animal. Note that the comparing step need not be essential: the drafting groups may be selected based on the unique data codes. The drafting controller 126 is then arranged to send an operation instruction to a voice chip 144. The operation instruction is indicative of the selected drafting group in that is causes the voice chip to generate an audible signal (to be output using amplifier 146) which corresponds to a selected drafting group.

Fig. 3 is a picture of a pair of headphones 150 that are indicator apparatus according to the invention. The pair of headphones 150 comprise a right earpiece 152 and a left earpiece 154 connected by a flexible headrest 156. The earpieces and headrest are made of lightweight plastic for ease of wear over prolonged periods. Each earpiece has a cushion pad 158 for comfort and to isolate the user's ear from external noise. To enable a good fit, each earpiece is attached to the headrest 156 at a hinged joint 160. In the embodiment, the left earpiece 154 contains the power supply and circuitry of the headphones (discussed further below). Both earpieces contain a speaker unit for emitting the audible signal discussed above. The earpieces are connected by a cable 162 (which travels through a channel in the headrest) for carrying power and data from the left earpiece 154 to the right earpiece 152. The left earpiece 154 has an external volume adjustor 164 mounted on its outer surface. A Bluetooth® receiver (not shown) is mounted inside the left earpiece 154 to receive an operation instruction to be processed by circuitry within the left earpiece 154. The circuitry is arranged to cause an audible signal to be emitted by the speaker units in the earpieces, which audible signal is indicative of a drafting group for a livestock animal.

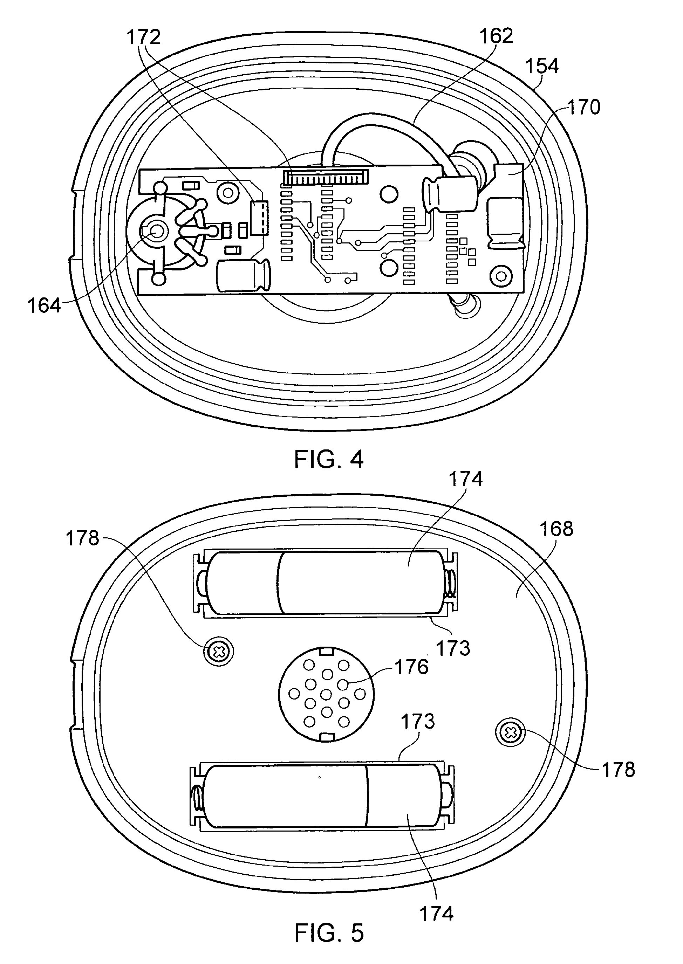

Figs. 4 and 5 are a picture of the inside of the left earpiece 154 with the cushion pad 158 removed. In Fig. 4, a cover piece 168 (seen in Fig. 5) is also removed. The cover piece 168 has slots 173 for receiving batteries 174 which provide power for the headphones and a speaker unit 176 mounted at its centre. The cover piece 168 is mounted via screws 178 onto a circuit board 170, which is shown mounted on the inside on the left earpiece in Fig. 4. The circuit board includes a voice chip having a processor arranged to interpret the an operation instruction received via the Bluetooth® connection as explained above. The volume adjustor 164 is provide at one end of the circuit board. The circuit board 170 includes pin connectors 172 which mate with corresponding plugs on the underside of cover 168 to connect the batteries 174 and the Bluetooth® receiver to the circuitry.

## Claims

1. Livestock drafting apparatus comprising:
an electronic identification (EID) reader arranged to obtain data from an EID element associated with a livestock animal;
a drafting controller arranged to receive the obtained data from the EID reader and automatically select a drafting group for the livestock animal based on the obtained data; and
an audio output device in communication with the drafting controller to receive an operation instruction which corresponds to the selected drafting group,
wherein the audio output device is arranged to output an audible signal which is indicative of the selected drafting group.

2. Livestock drafting apparatus according to claim 1, wherein the EID reader is in wireless communication with the drafting controller via a short range radio communication interface.

3. Livestock drafting apparatus according to claim 1 or 2, wherein the drafting controller has a processor arranged to execute software instructions to effect the automatic selection of a drafting group for a livestock animal based on data obtained from that animal's EID element.

4. Livestock drafting apparatus according to any preceding claim, wherein the drafting controller is portable.

5. Livestock drafting apparatus according to any preceding claim, wherein the drafting controller includes an animal database which stores information about livestock animals to be drafted, and where the drafting controller is arranged to look up information from the database for an animal based on the obtained data from that animal's EID element.

6. Livestock drafting apparatus according to claim 3, wherein the software instructions include a programmable set of criteria for allocating animals to a drafting group.

7. Livestock drafting apparatus according to any preceding claim, wherein the audio output device is a speaker unit in a pair of headphones.

8. Livestock drafting apparatus according to any preceding claim, wherein the audio output unit includes a processor for generating an audible command based on an operating instruction from the drafting controller that is indicative of the selected drafting group for a livestock animal.

9. Livestock drafting apparatus according to claim 8, wherein the processor includes a voice chip arranged to synthesise a spoken command from information contained in the operating instruction from the drafting controller.

10. Livestock drafting apparatus according to claim 9, wherein the spoken commands are programmable at the drafting controller.

11. Livestock drafting apparatus according to any preceding claim, wherein the drafting controller includes a comparison unit in which predetermined criteria may be set for comparison with the content of corresponding data fields stored for each livestock animal in a database that is accessible by the drafting controller, and
wherein the drafting controller is arranged to download the content of a data field for an animal from the database upon receiving the data obtained from the EID element of that animal and to provide the downloaded content to the comparison unit, the comparison unit being arranged to compare the downloaded content with the predetermined criteria to determine the drafting group for the animal.

12. A livestock drafting method for separating livestock into drafting groups according to predetermined criteria by directing livestock from a race into a set of drafting directions, each direction corresponding to one of the drafting groups, the method including:
setting criteria which characterise the drafting groups;
setting a drafting direction for each drafting group;
directing livestock through the race;
identifying an animal in the race by obtaining data from an electronic identification (EID) element associated with that animal;
accessing stored records relating to the identified animal;
comparing stored records with the set criteria to determine the drafting group for the identified animal; and
generating an audible signal indicative of a drafting direction on the basis of the determined drafting group.

13. A livestock drafting method according to claim 12, wherein the stored records are held on an electronic database and the step of accessing the records and comparing those records with the predetermined criteria is carried out automatically by executing software instructions in a drafting controller.

14. A livestock drafting method according to claim 12 or 13, wherein the accessing and comparing steps may take place before livestock are directed through the race.

15. Indicator apparatus for use with a livestock identification device to indicate the drafting direction of an identified animal to draft the identified animal into a drafting group determined by comparison of stored information relating to the identified animal with predetermined criteria, wherein the apparatus has a plurality of outputs that are selectively operable to indicate the drafting direction, and the apparatus is arranged to select its output on the basis of a signal representative of the determined drafting group.
